(19) Europäisches Patentamt
European Patent Office
Office européen des brevets

(11) **EP 3 063 866 B1**

(12) **EUROPEAN PATENT SPECIFICATION**

(45) Date of publication and mention
of the grant of the patent:
**01.07.2020 Bulletin 2020/27**

(21) Application number: **14796450.6**

(22) Date of filing: **29.10.2014**

(51) Int Cl.:
***H02M 7/483*** *(2007.01)*   ***H02J 3/36*** *(2006.01)*
***H02M 1/12*** *(2006.01)*

(86) International application number:
**PCT/EP2014/073260**

(87) International publication number:
**WO 2015/063179 (07.05.2015 Gazette 2015/18)**

(54) **A VECTOR CONTROLLER FOR A VOLTAGE SOURCE POWER CONVERTER**

VEKTORREGELUNG FÜR EINEN U-UMRICHTER

CONTRÔLE DE VECTEUR POUR UN CONVERTISSEUR DE PUISSANCE DE SOURCE DE TENSION

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **30.10.2013 GB 201319191**

(43) Date of publication of application:
**07.09.2016 Bulletin 2016/36**

(73) Proprietor: **General Electric Technology GmbH 5400 Baden (CH)**

(72) Inventor: **OATES, Colin Donald Murray Brocton Staffordshire ST17 0TL (GB)**

(74) Representative: **Openshaw & Co. 8 Castle Street Farnham, Surrey GU9 7HR (GB)**

(56) References cited:
**US-A1- 2013 208 519**

- **LE SUN ET AL: "A fast multi-level space vector PWM method based on sequence cyclic shift", INDUSTRIAL ELECTRONICS (ISIE), 2012 IEEE INTERNATIONAL SYMPOSIUM ON, IEEE, 28 May 2012 (2012-05-28), pages 40-45, XP032199687, DOI: 10.1109/ISIE.2012.6237056 ISBN: 978-1-4673-0159-6**

**Description**

This invention relates to a controller for a power converter for use in a high voltage power transmission network. In particular, it relates to a voltage source converter controller. The invention also relates to a voltage source converter incorporating said controller and a transmission network including at least one of said voltage source converters.

In high voltage direct current (HVDC) power transmission networks alternating current (AC) power is typically converted to direct current (DC) power for transmission via overhead lines and/or under-sea cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance.

The conversion of DC power to AC power is utilized in power transmission networks where it is necessary to interconnect the DC and AC electrical networks. In any such power transmission network, converters are required at each interface between AC and DC power to effect the required conversion; AC to DC or DC to AC. One such converter is a voltage source converter (VSC).

Voltage source converters need to be controlled to efficiently convert between AC and DC power with low levels of distortion. It is advantageous to tightly control the level of total harmonic distortion in voltage source converters.

A typical voltage source converter includes a chain-link converter. The chain-link converter may comprise at least one converter module, the or each converter module including at least one energy storage device and at least one switch, the or each energy storage device and the or each switch in the or each module combining to selectively provide a voltage source. In this manner the or each switch controls whether the or each energy storage device is bypassed or connected to a converter circuit which provides an output voltage of the converter. Thus, appropriate switching of the modules between "connect" and "bypass" modes can generate a voltage waveform using a step-wise approximation. The frequency at which the switching is performed thus effects the resolution of the waveform output by the converter and also the total harmonic distortion present therein. It is desirable to increase the switching frequency at which the modules are switched to reduce the size of step changes in the output waveform. However, increasing the switching frequency has consequences in the design of the controller controlling the VSC and can add significant complexity.

US 2013/208519 describes a switching element of a power converter generating a low voltage using a current flowing in the power converter and supplying power to drive itself. A switching element of a power converter for conversion from DC to AC or AC to DC includes: a terminal, a capacitor, a high-side controllable switch and a low-side controllable switch enabling outputting the voltage of the capacitor, and a self-supply power source for supplying a power to drive the bi-directional chopper switching element itself, using a current flowing in the capacitor.

The document by LE SUN ET AL, "A fast multi-level space vector PWM method based on sequence cyclic shift", INDUSTRIAL ELECTRONICS (ISIE), 2012 IEEE INTERNATIONAL SYMPOSIUM ON, IEEE, (2012.05. 28), DOI:10.1109/ISIE.2012.6237056, ISBN 978-1-4673-0159-6, pages 40 - 45, XP032199687 describes a cascaded H-bridge converter divided into N three phase bridge groups and the standard switching state sequence is cyclically shifted for 1/N, 2/N... (N-1)/N for the groups.

The present invention resides in a controller for a voltage source converter (VSC) according to claim 1, a voltage source converter according to claim 12 and a power transmission network according to claim 13. Preferred embodiments are defined in the remaining dependent claims.

The configuration of the present invention is advantageous as calculating the AC voltage demand value at a future time in the rotating reference frame space has been found to result in an accurate prediction of what the AC voltage demand should be at that future time. The rotating reference frame space considers the vector relationship between the phases of the measured AC voltage and the demand value and this vector information in the rotating space enables an accurate prediction of the AC voltage demand at the future time. It has been realised that the rotating space is analogous to the sinusoidal output desired by the controller and making predictions of voltage demand in the rotating space is advantageous. Particularly when compared to known interpolation techniques that predict future values based on a linear interpolation of a calculated value in cartesian space, the present technique may provide more accurate predicted values by exploiting the rotating nature of the rotating reference frame space. Thus, the AC voltage demand value at the future time can be considered an interpolation from a calculated value at a current time in said rotating reference frame space.

Accordingly, if the AC vector control element is configured to sample the AC voltage output from the VSC at a sample frequency, the frequency at which the module selection element provides the module instruction sets, which we can term the switching frequency, is greater than the sample frequency due to AC voltage demand values generated by the AC vector control element. Thus, the controller can achieve a higher switching frequency without increasing the sampling frequency. Put another way, a further advantage of the controller is that the frequency at which the module selection element generates module instruction sets is independent of sample frequency used in the remainder of the controller, as the two or more AC voltage demand values generated by the AC vector control can be calculated each sample period for output as module instruction sets at relevant times over the sample period by the module selection element. In this way the controller may be less complex compared to an arrangement in which the sample frequency is increased rather than predicting voltage demand values at future times.

The AC vector control element may be configured to apply an inverse DQ transform to the AC voltage demand values prior to forming said AC voltage demand signal. This is advantageous as the AC voltage demand signal provided to the module selection element will represent the voltage demand in conventional space.

The AC voltage demand value at the first time may comprise the AC voltage demand at the present time calculated from the symmetrical sequence rotating reference frame terms and the AC voltage demand value at the future time may comprise an interpolation, derived in the rotating reference frame space, from said same symmetrical sequence rotating reference frame terms. Alternatively both the first time and future time may comprise future times and therefore their associated AC voltage demand values are both interpolated values.

The AC vector control element may be configured to sample the AC voltage output from the VSC at a sample frequency and may generate a plurality of AC voltage demand values each comprising a prediction of the voltage demand at a different future time in the sample period corresponding to the sample frequency. This is advantageous as the AC vector control element can, in said rotating reference frame space, predict what the AC voltage demand should be at future times in the sample period based on the present sampled AC voltage output from the VSC and the demand value by calculating the values at advanced reference frame "positions".

The AC vector control element may be configured to sample the AC voltage output from the VSC at a sample frequency and the AC voltage demand value at the first time may comprise a voltage demand value calculated based on the present sampled measure of AC voltage and the present demand value at the present time and the voltage demand value at the future time may comprise a prediction of the voltage demand at a future time in the sample period corresponding to the sample frequency. Thus, the "first time" may be the present time comprising the instant the sampled inputs are received by the AC vector control element, while the "future time" voltage demand values comprise a prediction starting from the sampled inputs at the start of the sample period and projecting forward in said rotating reference frame space.

The AC voltage demand signal may comprise five AC voltage demand values, the first and future times associated with the values distributed over the sample period.

The module selection element may be configured to receive said AC voltage demand signal and step through said AC voltage demand values contained therein.

The controller may form part of a voltage source converter.

The controller may be configured to control a voltage source converter that includes a chain-link converter. The chain-link converter may comprise at least one converter module, the or each converter module including at least one energy storage device and at least one switch, the or each energy storage device and the or each switch in the or each module combining to selectively provide a voltage source. In this manner the or each switch controls whether the or each energy storage device is bypassed or connected to a converter circuit which provides the output voltage. The module switch instruction set thus controls the or each switch in each module, as required.

The demand value may comprise an alternating current demand value.

There now follows a brief description of a preferred embodiment of the invention, by way of a non-limiting example, with reference to the following figures in which:

Figure 1 shows a schematic diagram of an example controller controlling a voltage source power converter;
Figure 2 shows a schematic diagram of part of a AC vector control element for calculating voltage demand values;
Figure 3 shows a flowchart illustrating the steps performed by the controller;
Figure 4 shows, in schematic form, an example voltage source converter; and
Figure 5 shows, in schematic form, a module of the voltage source converter of Figure 4;

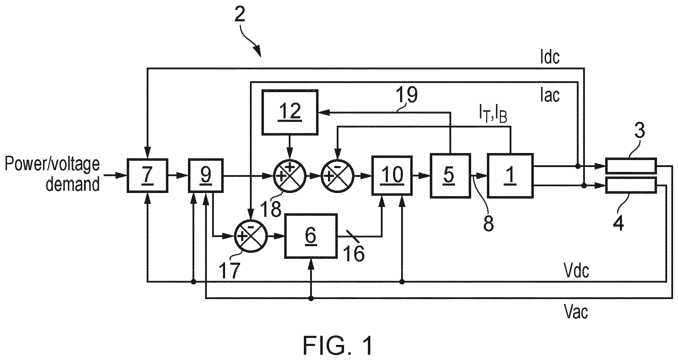

Figure 1 shows a schematic diagram of a power converter and its associated controller. The power converter 1 provides conversion of power between an AC power network or system 3 and a DC power network or system 4. In this example, the power converter 1 comprises a voltage source converter (VSC). The controller 2 may be integrated with the VSC 1. The VSC 1 includes a plurality of converter modules and typically includes several hundred converter modules. Each converter module may include two pairs of switches connected in parallel with a capacitor in a full-bridge arrangement to define a 4-quadrant bipolar module that can provide negative, zero or positive voltage and can conduct current in two directions. In this manner the switches control whether the capacitor is bypassed or connected to a converter circuit which provides the output voltage to the network 3,4. The VSC 1 is able to build up a combined voltage across the chain-link converter, which is higher than the voltage available from each of its individual converter modules, via the insertion of capacitors of multiple converter modules, each providing its own voltage, into the chain-link converter. In this manner switching of the switches in each converter module causes the chain-link converter to provide a stepped variable voltage source, which permits the generation of a voltage waveform across the chain-link converter using a step-wise approximation. As such the chain-link converter is capable of providing a wide range of complex voltage waveforms.

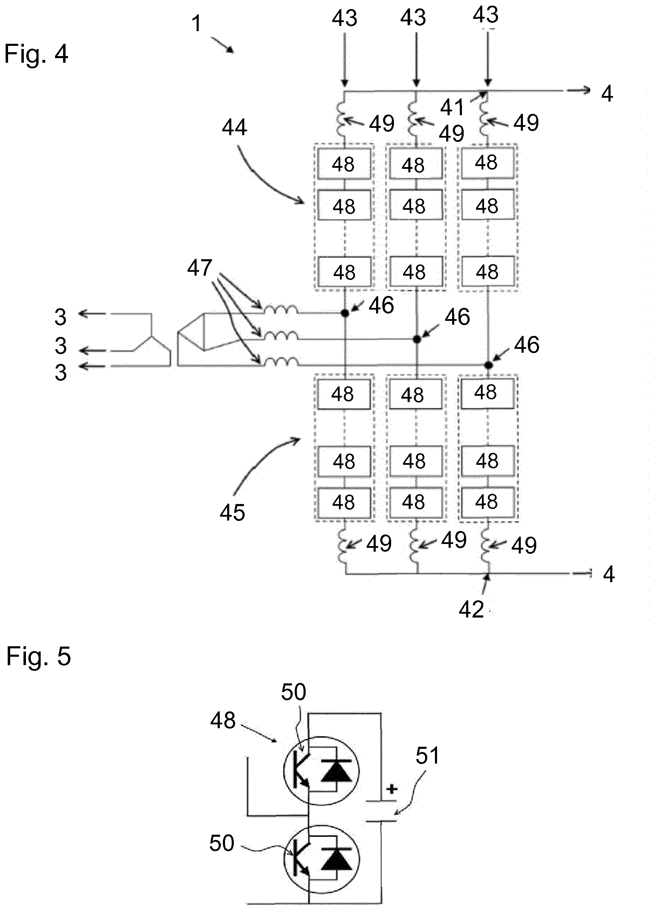

Figures 4 and 5 show an example construction of the VSC 1.

The voltage source converter 1 comprises first and second DC terminals 41,42 and three converter limbs 43. Each converter limb 43 extends between the first and second DC terminals 41,42. Each converter limb 43 includes first and second limb portions 44,45 separated by a respective AC terminal 46.

In use, the first and second DC terminals 41,42 are respectively connected to positive and negative poles of the DC electrical network 4, while each AC terminal 46 is connected to a respective phase of a three-phase AC electrical network 3. More particularly, in the case of the latter, the AC terminals 46 of the voltage source converter 1 are connected to the AC electrical network 3 via a star-delta transformer that includes mutually coupled star-connected and delta-connected windings. Each AC terminal is connected to a respective corner of the delta-connected winding, and so the star-delta transformer presents a respective series reactance (which is shown as an inductor 47 in Figure 4) to each AC terminal.

Each limb portion 44,45 includes a plurality of series-connected modules 48 connected in series with a limb inductor 49. Each module 48 includes a pair of active switching elements 50 and an energy storage device in the form of a capacitor 51. The pair of active switching elements 50 is connected in parallel with the capacitor 51 in a half-bridge arrangement, as shown in Figure 5.

Each active switching element 50 constitutes an insulated gate bipolar transistor (IGBT), which is connected in parallel with an anti-parallel passive current check element in the form of a diode. It is envisaged that, in other embodiments of the invention, each active switching element may be replaced by a plurality of active switching elements, e.g. a plurality of series-connected active switching elements. It is further envisaged that, in other embodiments of the invention, each IGBT may be replaced by another type of active switching element, for example, a metal-oxide-semiconductor field-effect transistor, a gate turn-off thyristor or an integrated gate-commutated thyristor. It is envisaged that, in other embodiments of the invention, each passive current check element of each first switching element may be replaced by a plurality of passive current check elements, e.g. a plurality of series-connected passive current check elements. It is envisaged that, in other embodiments of the invention, each capacitor 51 may be replaced by another type of energy storage device that is capable of storing and releasing energy, e.g. a fuel cell or battery.

In each limb portion 44,45, the plurality of series-connected modules 48 defines a valve, and the operation of each module 48 in each valve is described as follows.

The capacitor 51 of the module 48 is selectively bypassed or inserted into the valve by changing the states of the IGBTs. This selectively directs current through the capacitor 51 or causes current to bypass the capacitor 51, so that the module 48 provides a zero or positive voltage.

The capacitor 51 of the module 48 is bypassed when the IGBTs are configured to form a short circuit that bypasses the capacitor 51. This causes current in the valve to pass through the short circuit and bypass the capacitor 51, and so the module 48 provides a zero voltage, i.e. the module 48 is configured in a bypassed mode.

The capacitor 51 of the module 48 is inserted into the valve when the IGBTs are configured to allow the current in the valve to flow into and out of the capacitor 51. The capacitor 51 then charges or discharges its stored energy so as to provide a non-zero voltage, i.e. the module 48 is configured in a non-bypassed mode.

In this manner the IGBTs are connected in parallel with the capacitor 51 in a half-bridge arrangement to define a 2-quadrant unipolar module 48 that can provide zero or positive voltage and can conduct current in two directions, and so each module 48 is capable of selectively providing a voltage source.

In other embodiments of the invention, it is envisaged that each module may be replaced by another type of module that includes at least one switching element and at least one energy storage device, whereby the or each switching element and the or each energy storage device in the or each module combines to selectively provide a voltage source.

It is possible to build up a combined voltage across the valve, which is higher than the voltage available from each of its individual modules 48 via the insertion of the capacitors 51 of multiple modules 48, each providing its own voltage, into the valve. In this manner switching of the IGBTs in each module 48 causes the valve to provide a stepped variable voltage source, which permits the generation of a voltage waveform across the valve using a step-wise approximation. As such each valve is capable of providing a wide range of complex voltage waveforms.

The voltage source converter 1 is controlled by the controller 2, and, in particular, by a module selection element 5 of the controller 2 configured to control switching of the switching elements 50 in each module 48 of each limb portion 44,45. More particularly, the controller 2 is configured to generate a respective valve voltage demand $V_T,V_B$ for each valve which is used by the module selection element to generate a module switch instruction set to control switching of the switching elements 50 in each module 48 of each limb portion 44,45 in accordance with the respective valve voltage demand $V_T,V_B$ for each valve.

In use, the voltage source converter 1 is operable to transfer power between the AC and DC electrical networks 3,4 through switching of the switching elements 50 in each module 48 so as to selectively operate each limb portion 44,45 as a respective discrete controlled voltage source between the AC and DC terminals 46,41,42 over an operating cycle of the voltage source converter 1. Operating a limb portion as a discrete controlled voltage source between the corresponding AC and DC terminals 46,41,9 enables the limb portion 44,45 to be further operated to control the configuration of a voltage at the respective terminal 46,41,42. For example, the switching elements 50 in each module 48 can be switched to selectively provide a voltage source to "pull down" (subtract voltage steps from) a DC voltage at the respective DC terminal 41,42 to control the configuration of an AC voltage at the AC terminal 46. Such switching of the switching elements 50 in each module 48 of each limb portion 44,45 is carried out in accordance with the respective valve voltage demand $V_T, V_B$ for each valve.

In order for the voltage source converter 10 to exchange power with the AC and DC electrical networks 3,4 and thereby cause transfer of power between the AC and DC electrical networks 3,4, the controller 2 and module selection element 5 controls the operation of the voltage source converter 1 in accordance with AC and DC voltage demands and alternating and direct current demands.

In use, the DC electrical network 4 is operated within or up to a predefined rated DC voltage Vdc and the AC electrical network 3 is operated within or up to a predefined rated AC voltage Vac. The AC and DC output voltage demands for the voltage source converter 1 respectively correspond to the AC voltage of the AC electrical network 3 and the DC voltage of the DC electrical network 4.

Figure 1 shows, in schematic form, a layout of an example of the controller 2.

The controller 2 includes a DC outer loop control element 7, a power equating control element 9, a plurality of valve voltage demand sub-controllers 10, a AC vector control element 6, and a capacitor balancing control element 12. Each of the plurality of valve voltage demand sub-controllers 10 is associated with a respective one of the valves. For the purposes of simplicity, Figure 1 shows only one of the plurality of valve voltage demand sub-controllers 10.

Figure 1 further shows, in schematic form, the use of limb portion currents $I_T, I_B$ and alternating and direct currents Iac, Idc, (which may be derived by a sum-difference control element - not shown) whereby the alternating current Iac flows at the AC terminal 46 of the converter limb 43, and the direct current Idc flows at the first and second DC terminals 41,9 of the converter limb 43.

The DC outer loop control element 7 is configured to receive a power demand and the AC and DC output voltage demands. The DC outer loop control element 7 is configured to receive a measured direct current Idc and a measured DC voltage Vdc of the DC electrical network 4.

The DC outer loop control element 7 regulates the DC power flow of the voltage source converter 1 (or regulates the DC voltage Vdc across the first and second DC terminals 41,42), and provides information to the power equating control element 9, whereby the information consists of the power demand, the AC and DC output voltage demands, a direct current demand, the measured direct current Idc and DC voltage Vdc of the DC electrical network 4.

The power equating control element 9 generates a direct current demand based on the AC and DC output voltage demands and based on a balancing of an AC power exchanged between the voltage source converter 1 and the AC electrical network 3 and a DC power exchanged between the voltage source converter 1 and the DC electrical network 4. The power equating control element 9 scales the direct current demand received from the DC outer loop control element 7 to create an equivalent alternating current demand. The power equating control element 9 is configured to limit both alternating and direct current demands if excessive power is being demanded.

The controller 2 further includes alternating and direct current signal comparison elements 17,18.

The alternating current signal comparison element 17, which in the embodiment shown is depicted as a difference junction, compares the alternating current demand (as provided by the power equating control element 9) with a measured alternating current Iac flowing between the voltage source converter 1 and the AC electrical network 3 so as to generate a modified alternating current demand, which is subsequently provided to the AC vector control element 6.

The direct current signal comparison element 18, which in the embodiment shown is depicted as a summing junction, modifies the direct current demand (as provided by the power equating control element) based on a capacitor balancing compensation signal from the capacitor balancing control element 12, and the direct current demand is subsequently provided to the valve voltage demand sub-controller 10. The capacitor balancing control element 12 is configured to receive an average voltage level 19 of the plurality of capacitors 51 in each limb portion 44,45 from the module selection element 5, and to process the received average voltage levels 19 to generate a capacitor balancing compensation signal. The capacitor balancing compensation signal may be configured in various ways to enable modification of the direct current demand from the power equating control element 9.

The AC vector control element 6 is configured to process the modified alternating current demand to provide an AC voltage demand signal. The AC vector control element 6 is further configured to provide the AC voltage demand signal to the valve voltage demand sub-controller 10.

For a given level of transfer of power between the voltage source converter 1 and the AC electrical network 3, the provision of the AC output voltage demand signal by the AC vector control element 6 enables control over an alternating current Iac flowing between the voltage source converter 1 and the AC electrical network 3. More particularly, the AC vector control element 6 controls the alternating current Iac by manipulating the AC voltage phase and magnitude. As such the AC vector control element 6 regulates the AC power flow of the voltage source converter 1.

The valve voltage demand sub-controller 10 is configured to generate the respective valve voltage demand $V_T, V_B$ for each valve. The use of the respective limb portion current $I_T, I_B$ as feedback allows the valve voltage demand sub-controller 10 to function as a feedback deadbeat control and thereby enhances control over the operation of the voltage source converter 1 to transfer power between the AC and DC electrical networks 3,4 while having minimal effect on the bandwidths of the other cascaded components 7,9,6,12 of the controller 2 that are configured to provide the demands to the valve voltage demand sub-controller 10.

The respective valve voltage demand $V_T, V_B$ for each valve is provided to the module selection element 5. The element 5 then selects, by way of switching instructions 8, the modules 48 required to be in the non-bypassed mode in order to enable generation of a voltage across the valve to meet the valve voltage demand $V_T, V_B$.

Preferably the module selection element 5 is configured to select the modules 48 required to be in the non-bypassed mode so as to enable balancing of the energy levels of the capacitors 51 of the plurality of modules 48 in each valve.

In respect of each limb portion 44,45, the module selection element 5 is configured to control switching of the switching elements 50 of each module 28 in order to meet the respective valve voltage demand $V_T, V_B$. Control of the modules 46 thereby causes transfer of power between the AC and DC electrical networks 3, 4.

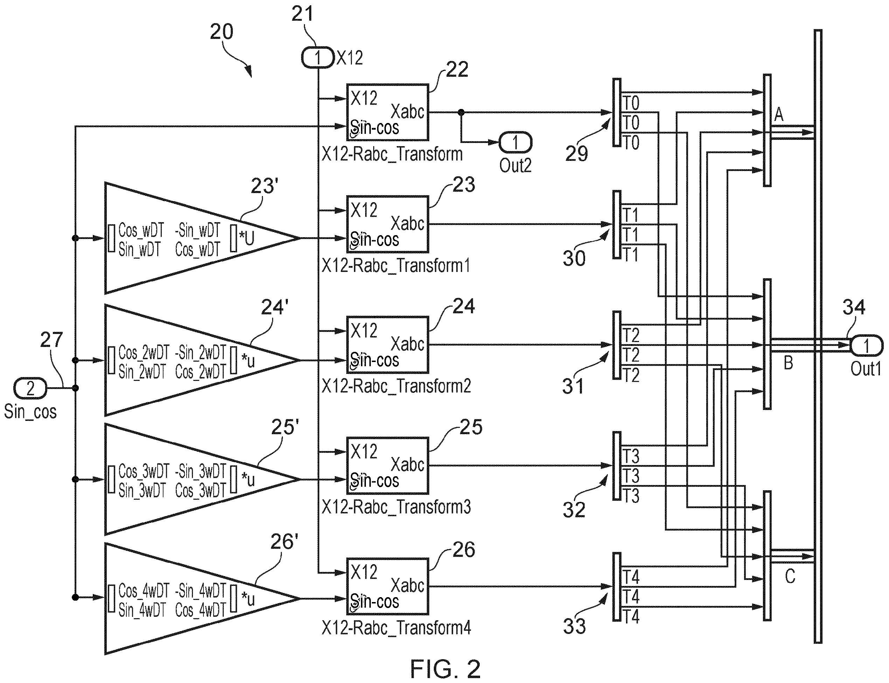

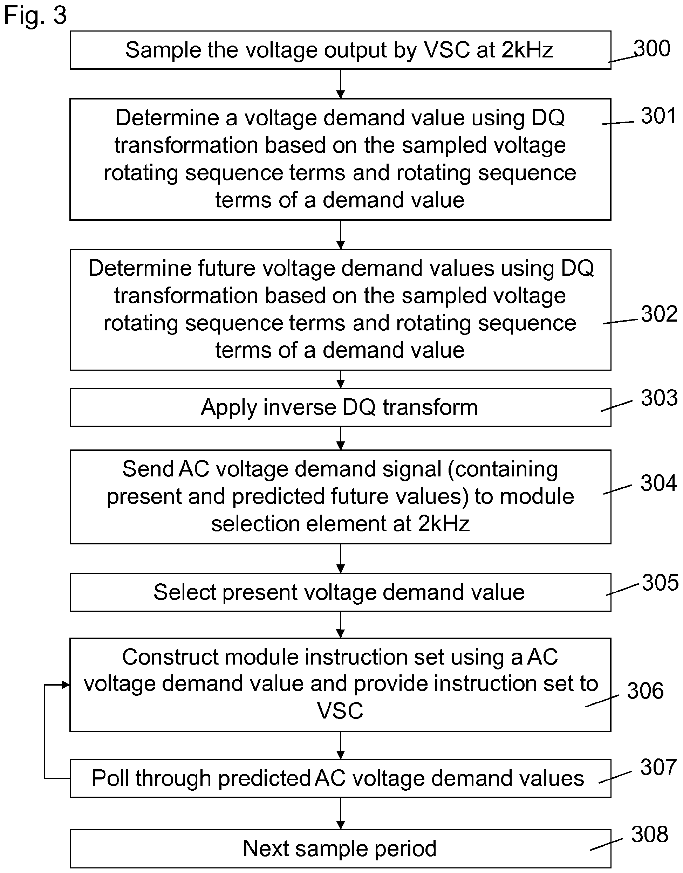

With reference to figures 1 and 2, the AC vector control element 6 samples the three phase AC voltage Vac output by the VCS 1 at a sample frequency of 2 kHz (hereinafter referred to as the "sampled voltage"). The AC vector control element 6 also receives a demand value, comprising the modified alternating current demand described above, which it uses with the sampled voltage to determine (with further processing by the sub-controller 10) an AC voltage demand signal 16, as will be described below. The receipt of the sample voltage by the AC vector control element 6 is shown as step 300 in Figure 3.

The AC vector control element 6 uses the known technique of DQ (Direct, Quadrature) transformation to process the sampled voltage and the demand value and generate the AC voltage demand signal. In particular, the sampled voltage is transformed, using a DQ transform (via a two phase $\alpha$-$\beta$ stationary coordinate system as necessary), into a set of rotating frame terms operating in a rotating reference frame space. Likewise, the demand value is also transformed using a DQ transform into a set of rotating frame terms operating in the rotating reference frame space.

The AC vector control element 6 generates an AC voltage demand signal in order to match the sequence terms for the sampled voltage to the sequence terms of the demand value. In particular, the AC vector control element 6, at the start of or during each sample period (corresponding to the sample frequency) calculates a voltage demand value based on the rotating frame terms. In addition to this voltage demand value at this present first time, the AC vector control element 6 also calculates, using the same sequence terms, four further voltage demand values which represent what the element 6 predicts the voltage demand should be at four future times in the sample period. The predicted values are calculated by interpolation in the rotating reference frame space. The present time and four future times, in this example, are evenly distributed over the sample period. As the rotating reference frame space enables processing of the input values as rotating terms, it provides an advantageous space in which to make predictions of future voltage demand values as the rotating space is analogous to the sinusoidal output the controller 2 and VSC 1 are configured to produce. Accordingly, the voltage demand values that are predicted for the four future times have been found to result in module selection having low total harmonic distortion. This calculation of a present voltage demand value is shown as step 301 and the calculation of future values by interpolation in rotating space as step 302 in figure 3.

The AC vector control element 6 applies an inverse DQ transform to the calculated voltage demand values for the present and future times (step 303) and passes the set of voltage demand values via the sub-controller 10 to the module selection element 5 as part of the voltage demand signal 16 (step 304). After the inverse transform has been applied, the AC voltage demand value comprises a voltage level for each of the phases that form the AC voltage. The AC voltage demand signal 16 therefore has a frequency of 2 kHz, the same as the sample frequency, as the sets of present and predicted voltage demand values are sent every 0.5ms, in this example.

Figure 2 shows a functional diagram representing part of the AC vector control element 6 and showing the generation of the present and predicted future voltage demand values. A prediction element 20 of the AC vector control element 6 receives the rotating frame sequence terms at input 21. The rotating frame sequence terms are received by five rotating frame calculation elements 22, 23, 24, 25, 26 for the current and four predicted voltage demand values respectively. It will be appreciated that although Figure 2 shows the five calculation elements separately as if the voltage demand values are calculated in parallel with one another, the voltage demand values may be calculated sequentially in series. The prediction element 20 also receives an input 27, which represents the rotating reference frame, comprising a vector from a phase locked loop. Each of the DQ calculation elements that calculate a predicted voltage demand value 23, 24, 25, 26 are associated with a reference frame shift element 23', 24', 25', 26'. The reference frame shift elements effectively shifts the reference frame such that a prediction or interpolation of the voltage demand at a future time can be made. Thus, if the reference frame rotates at an angular velocity of $\omega$ (tied to the power frequency) and DT represents a timeshift in the sample period, then the rotating frame sequence terms can be considered at $\omega DT$, $2\omega DT$, $3\omega DT$ and $4\omega DT$, to obtain the four predicted AC voltage demand values.

The first rotating frame calculation element 22 is configured to calculate the current (or "first") AC voltage demand value based on the present sequence terms at the present time. The first DQ calculation element 22 thus receives input 27 directly. The second rotating frame calculation element 23 is configured to calculate a first of the predicted AC voltage demand values and thus receives the rotating frame sequence terms and the reference frame shifted by ωDT by reference frame shift element 23'. The third rotating frame calculation element 24 is configured to calculate a second of the predicted AC voltage demand values and thus receives the rotating frame sequence terms and the reference frame shifted by 2ωDT by reference frame shift element 24'. The fourth rotating frame calculation element 25 is configured to calculate a third of the predicted AC voltage demand values and thus receives the rotating frame sequence terms and the reference frame shifted by 3ωDT by reference frame shift element 25'. The fifth rotating frame calculation element 26 is configured to calculate a fourth of the predicted AC voltage demand values and thus receives the rotating frame sequence terms and the reference frame shifted by 4ωDT by reference frame shift element 26'. The shift elements are therefore provided to time shift the input from the phase locked loop by increments within the sample period such that the predictions of AC voltage demand can be determined using a symmetrical sequence method. This time shift is achieved using a matrix multiplication factor of;

$$\begin{pmatrix} \cos(\omega * shift) & -\sin(\omega * shift) \\ \sin(\omega * shift) & \cos(\omega * shift) \end{pmatrix} \cdot \begin{pmatrix} \cos(\omega * t) \\ \sin(\omega * t) \end{pmatrix}$$

Where shift is equal to DT, 2DT, 3DT, 4DT, depending on the time shift required and $\cos(\omega * t)$ and $\sin(\omega * t)$ are values provided by the phase locked loop.

Inverse transform elements 29, 30, 31, 32 and 33 are provided for each rotating frame calculation element 22, 23, 24, 25, 26 for applying an inverse DQ transform to the AC voltage demand value. The output 34 thus receives AC voltage demand values for each of the three phases, shown as A, B and C in Figure 2.

The module selection element 5 is configured to receive the set of voltage demand values (present and predicted future values) and poll through them in turn. Thus, the module selection element 5 starts with the present voltage demand value (step 305) and determines a module instruction set therefrom by any known means (step 306). The module selection element 5 then continues to poll through the AC voltage demand values at step 307. Accordingly, a first of the predicted voltage demand values is selected (i.e. the earliest of the future times), then a second of the predicted voltage demand values (i.e. the next earliest of the future times) and so on. The module selection element 5 is configured to poll successively through the voltage demand values such that they are used by the module selection element at a time corresponding to the time on which the prediction is based. For each voltage demand value, the module selection element 5 determines a module instruction set for switching the appropriate modules of the VSC 1. Thus, a module instruction set is formed from the present AC voltage demand value, then the first predicted voltage demand value, then the second, then the third and then the fourth predicted voltage demand value. Thus, the module selection element operates at a module switch instructing frequency of 10kHz as it provides five module instruction sets from the five voltage demand values produced by the AC vector control element 6 each sample period (where the sample frequency is 2 kHz). This is advantageous as the module selection element 5 can be configured to operate at 10 kHz while the AC vector control 6 only need operate and sample the output of the VSC 1 at 2 kHz, which reduces the complexity of the controller.

After the five AC voltage demand values of the AC voltage demand signal have been polled through, the AC vector control element 6 will sample the AC voltage output from the VSC 1 and can then derive a further set of five AC voltage demand values (one present and four predicted) from the subsequent rotating terms of the sampled voltage and demand value. Step 308 shows that the method moves onto the next sample period and repeats the steps 300 to 307.

It will be appreciated that other numbers of predicted future voltage demand values could be calculated such as one, two, three, five, six, seven, eight or more values. In some embodiments, the present voltage demand value may not be calculated and the AC voltage demand signal may comprise two or more predicted voltage demand values. It will be appreciated that the sample frequency may be other than 2 kHz and the switching frequency will depend on the number of AC voltage demand values generated by the AC vector control 6 and the sample frequency. In some embodiment the AC voltage demand values may not be calculated or polled through at regular intervals over the sample period. The controller is described as measuring a three-phase voltage/current output by the VSC, however, it will be appreciated that the VSC may be a single or multi-phase converter operating using any number of phases.

**Claims**

1. A controller (2) for a voltage source converter (1), **characterised in that** said controller (2) includes:

an AC vector control element (6) configured to generate an AC voltage demand signal based on a measure of an AC voltage output from the voltage source converter (1) sampled at a sample frequency and a demand value, a module selection element (5) configured to determine a module instruction set (8) based on said AC voltage demand signal (16), said module instruction set (8) providing switching instructions for a plurality of modules (48) of the voltage source converter (1) to form an output waveform,

said AC vector control element (6) configured to generate said AC voltage demand signal (16) in a rotating reference frame space formed by transformation, using a DQ transform, of said measure of the AC voltage output and said demand value into a set of rotating frame sequence terms (21) operating in the rotating reference frame space,

wherein said AC vector control element (6) is configured to generate said AC voltage demand signal (16) comprising at least two AC voltage demand values, each comprising an AC voltage demand value at a respective time, the respective times distributed over a sampling period, wherein the at least two AC voltage demand values comprise an AC demand value at a first time and at least one AC voltage demand value at a future time, the AC voltage demand values calculated from the same set of rotating frame sequence terms (21), said AC voltage demand values determined in said rotating reference frame space, wherein said module selection element (5) is configured to determine the module instruction set (8) for each of the at least one AC voltage demand values at a future time in accordance with the respective times at which demand values are generated; and

wherein the at least one of the at least two AC voltage demand values which is generated for the future time is predicted **in that** it is calculated from the same set of rotating frame sequence terms (21) by shifting the rotating reference frame.

2. The controller according to claim 1, in which the AC voltage demand value at a first time comprises the AC voltage demand at a present time calculated from the set of reference frame terms.

3. The controller according to claim 1 or claim 2, in which the AC vector control element (6) is configured to apply an inverse DQ transform to the AC voltage demand values prior to forming said AC voltage demand signal (16).

4. The controller according to any one of claims 1 to 3, in which the AC vector control element (6) is configured to sample the AC voltage output from the voltage source converter (1) at a sample frequency and generate a plurality of AC voltage demand values at a future time, each comprising a prediction of the AC voltage demand at a different future time in a sample period corresponding to a sample frequency.

5. The controller according to claim 4, in which the AC voltage demand signal comprises five AC voltage demand values, the first and four future times associated with the values distributed over the sample period.

6. The controller according to any preceding claim, in which the module selection element (5) is configured to receive said AC voltage demand signal (16) and poll successively through said AC voltage demand values contained therein such that they are used at a respective time corresponding to the time on which the prediction value is based, the module selection element (5) configured to form the module instruction set for each of the AC voltage demand values.

7. The controller according to any preceding claim, in which the controller (2) forms part of a voltage source converter (1).

8. The controller according to any preceding claim, in which the module selection element (5) is configured to generate the module instruction set (8) at a frequency independent of a sampling frequency of the AC voltage output of the voltage source converter (1).

9. The controller according to any preceding claim, in which the measure of the AC voltage output from the voltage source converter (1) comprises a measure of a multi-phase output of the voltage source converter (1).

10. The controller according to claim 1, in which the rotation of the rotating reference frame space is determined relative to a measure of AC current from the voltage source converter (1).

11. The controller according to claim 1, in which the demand value comprises an alternating current demand value.

12. A voltage source converter (1) including the controller (2) of any one of claims 1 to 11.

13. A power transmission network (3, 4) including the voltage source converter (1) of claim 12.

**Patentansprüche**

1. Steuerung (2) für einen Spannungsquellenwandler (1), **dadurch gekennzeichnet, dass** die Steuerung (2) einschließt:

ein Wechselstromvektor-Steuerelement (6), das dazu konfiguriert ist, ein Wechselspannungsanforderungssignal basierend auf einem Maß eines Wechselspannungsausgangs aus dem Spannungsquellenwandler (1), der mit einer Abtastrate abgetastet wird, und einem Anforderungswert zu erzeugen,

ein Modulauswahlelement (5), das dazu konfiguriert ist, eine Modulbefehlsliste (8) basierend auf dem Wechselspannungsanforderungssignal (16) zu bestimmen, wobei die Modulbefehlsliste (8) Schaltbefehle für eine Mehrzahl von Modulen (48) des Spannungsquellenwandlers (1) zum Bilden einer Ausgangskurvenform bereitstellt,

wobei das Wechselstromvektor-Steuerelement (6) dazu konfiguriert ist, das Wechselspannungsanforderungssignal (16) in einem Drehreferenzrahmenraum zu erzeugen, der durch Transformation, unter Verwendung einer d/q-Transformation, des Maßes des Wechselspannungsausgangs und des Anforderungswerts in eine Liste von Drehrahmensequenztermen (21), die in dem Drehreferenzrahmenraum wirksam sind, gebildet wird,

wobei das Wechselstromvektor-Steuerelement (6) dazu konfiguriert ist, das Wechselspannungsanforderungssignal (16), das mindestens zwei Wechselspannungsanforderungswerte umfasst, von denen jeder einen Wechselspannungsanforderungswert zu einem entsprechenden Zeitpunkt umfasst, zu erzeugen, wobei die entsprechenden Zeitpunkte über eine Abtastperiode verteilt sind, wobei die mindestens zwei Wechselspannungsanforderungswerte einen Wechselspannungsanforderungswert zu einem ersten Zeitpunkt und mindestens einen Wechselspannungsanforderungswert zu einem zukünftigen Zeitpunkt umfassen, wobei die Wechselspannungsanforderungswerte aus der gleichen Liste von Drehrahmensequenztermen (21) berechnet werden, wobei die Wechselspannungsanforderungswerte in dem Drehreferenzrahmenraum bestimmt werden, wobei das Modulauswahlelement (5) dazu konfiguriert ist, die Modulbefehlsliste (8) für jeden der mindestens einen Wechselspannungsanforderungswerte zu einem zukünftigen Zeitpunkt in Übereinstimmung mit den entsprechenden Zeitpunkten, zu denen Anforderungswerte erzeugt werden, zu bestimmen; und

wobei der mindestens eine der mindestens zwei Wechselspannungsanforderungswerte, der für den zukünftigen Zeitpunkt erzeugt wird, dadurch vorhergesagt wird, dass er durch Verschieben des Drehreferenzrahmens aus derselben Liste von Drehrahmensequenztermen (21) berechnet wird.

2. Steuerung nach Anspruch 1, in der der Wechselspannungsanforderungswert zu einem ersten Zeitpunkt die Wechselspannungsanforderung zu einem gegenwärtigen Zeitpunkt, die aus der Liste von Referenzrahmentermen berechnet wird, umfasst.

3. Steuerung nach Anspruch 1 oder Anspruch 2, in der das Wechselstromvektor-Steuerelement (6) dazu konfiguriert ist, vor dem Bilden des Wechselspannungsanforderungssignals (16) eine inverse d/q-Transformation an die Wechselspannungsanforderungswerte anzulegen.

4. Steuerung nach einem der Ansprüche 1 bis 3, in der das Wechselstromvektor-Steuerelement (6) dazu konfiguriert ist, den Wechselspannungsausgang aus dem Spannungsquellenwandler (1) mit einer Abtastrate abzutasten und eine Mehrzahl von Wechselspannungsanforderungswerten zu einem zukünftigen Zeitpunkt zu erzeugen, von denen jeder eine Vorhersage der Wechselspannungsanforderung zu einem unterschiedlichen zukünftigen Zeitpunkt in einer der Abtastrate entsprechenden Abtastperiode umfasst.

5. Steuerung nach Anspruch 4, in der das Wechselspannungsanforderungssignal fünf Wechselspannungsanforderungswerte umfasst, wobei der erste und der vierte zukünftige Zeitpunkt den über die Abtastperiode verteilten Werten zugeordnet sind.

6. Steuerung nach einem vorstehenden Anspruch, in der das Modulauswahlelement (5) dazu konfiguriert ist, das Wechselspannungsanforderungssignal (16) zu empfangen und nacheinander die darin enthaltenen Wechselspannungsanforderungswerte abzufragen, sodass sie zu einem entsprechenden Zeitpunkt verwendet werden, der dem Zeitpunkt entspricht, auf dem der Vorhersagewert basiert, wobei das Modulauswahlelement (5) dazu konfiguriert ist, die Modulbefehlsliste für jeden der Wechselspannungsanforderungswerte zu bilden.

7. Steuerung nach einem vorstehenden Anspruch, in der die Steuerung (2) einen Teil eines Spannungsquellenwandlers (1) bildet.

**8.** Steuerung nach einem vorstehenden Anspruch, in der das Modulauswahlelement (5) dazu konfiguriert ist, die Modulbefehlsliste (8) mit einer Frequenz zu erzeugen, die von einer Abtastrate des Wechselspannungsausgangs des Spannungsquellenwandlers (1) unabhängig ist.

**9.** Steuerung nach einem vorstehenden Anspruch, in der das Maß des Wechselspannungsausgangs aus dem Spannungsquellenwandler (1) ein Maß eines mehrphasigen Ausgangs des Spannungsquellenwandlers (1) umfasst.

**10.** Steuerung nach Anspruch 1, in der die Drehung des Drehreferenzrahmenraums relativ zu einem Maß eines Wechselstroms von dem Spannungsquellenwandler (1) bestimmt wird.

**11.** Steuerung nach Anspruch 1, in der der Anforderungswert einen Wechselstromanforderungswert umfasst.

**12.** Spannungsquellenwandler (1), der die Steuerung (2) nach einem der Ansprüche 1 bis 11 einschließt.

**13.** Stromübertragungsnetzwerk (3, 4) das den Spannungsquellenwandler (1) nach Anspruch 12 einschließt.

**Revendications**

**1.** Dispositif de commande (2) pour un convertisseur source de tension (1), **caractérisé en ce que** ledit dispositif de commande (2) inclut :

un élément de commande de vecteur CA (6) configuré pour générer un signal de demande de tension CA sur la base d'une mesure d'une sortie de tension CA provenant du convertisseur source de tension (1) échantillonnée à une fréquence d'échantillonnage et d'une valeur de demande,
un élément de sélection de module (5) configuré pour déterminer un ensemble d'instructions de module (8) sur la base dudit signal de demande de tension CA (16), ledit ensemble d'instructions de module (8) fournissant des instructions de commutation pour une pluralité de modules (48) du convertisseur source de tension (1) pour former une forme d'onde de sortie,
ledit élément de commande de vecteur CA (6) étant configuré pour générer ledit signal de demande de tension CA (16) dans un espace de cadre de référence rotatif formé par transformation, en utilisant une transformée DQ, de ladite mesure de la sortie de tension CA et de ladite valeur de demande en un ensemble de termes de séquence de cadre rotatif (21) opérant dans l'espace de cadre de référence rotatif,
dans lequel ledit élément de commande de vecteur CA (6) est configuré pour générer ledit signal de demande de tension CA (16) comprenant au moins deux valeurs de demande de tension CA, chacune comprenant une valeur de demande de tension CA à un instant respectif, les instants respectifs étant distribués durant une période d'échantillonnage, dans lequel les au moins deux valeurs de demande de tension CA comprennent une valeur de demande CA à un premier instant et au moins une valeur de demande de tension CA à un instant futur, les valeurs de demande de tension CA étant calculées à partir du même ensemble de termes de séquence de cadre rotatif (21), lesdites valeurs de demande de tension CA étant déterminées dans ledit espace de cadre de référence rotatif, dans lequel ledit élément de sélection de module (5) est configuré pour déterminer l'ensemble d'instructions de module (8) pour chacune de l'au moins une valeur de demande de tension CA à un instant futur conformément aux instants respectifs auxquels des valeurs de demande sont générées ; et
dans lequel l'au moins une des au moins deux valeurs de demande de tension CA qui est générée pour l'instant futur est prédite **en ce qu'**elle est calculée à partir du même ensemble de termes de séquence de cadre rotatif (21) en déplaçant le cadre de référence rotatif.

**2.** Dispositif de commande selon la revendication 1, dans lequel la valeur de demande de tension CA à un premier instant comprend la demande de tension CA, à un instant présent, calculée à partir de l'ensemble de termes de cadre de référence.

**3.** Dispositif de commande selon la revendication 1 ou la revendication 2, dans lequel l'élément de commande de vecteur CA (6) est configuré pour appliquer une transformée DQ inverse sur les valeurs de demande de tension CA avant de former ledit signal de demande de tension CA (16).

**4.** Dispositif de commande selon l'une quelconque des revendications 1 à 3, dans lequel l'élément de commande de vecteur CA (6) est configuré pour échantillonner la sortie de tension CA provenant du convertisseur source de tension (1) à une fréquence d'échantillonnage et générer une pluralité de valeurs de demande de tension CA à un instant futur, chacune comprenant une prédiction de la demande de tension CA à un instant futur différent dans une période d'échantillonnage correspondant à une fréquence d'échantillonnage.

5. Dispositif de commande selon la revendication 4, dans lequel le signal de demande de tension CA comprend cinq valeurs de demande de tension CA, le premier instant et les quatre instants futurs étant associés aux valeurs distribués durant la période d'échantillonnage.

6. Dispositif de commande selon une quelconque revendication précédente, dans lequel l'élément de sélection de module (5) est configuré pour recevoir ledit signal de demande de tension CA (16) et consulter successivement lesdites valeurs de demande de tension CA contenues dans celui-ci de telle sorte qu'elles soient utilisées à un instant respectif correspondant à l'instant sur lequel la valeur de prédiction est fondée, l'élément de sélection de module (5) étant configuré pour former l'ensemble d'instructions de module pour chacune des valeurs de demande de tension CA.

7. Dispositif de commande selon une quelconque revendication précédente, dans lequel le dispositif de commande (2) fait partie d'un convertisseur source de tension (1).

8. Dispositif de commande selon une quelconque revendication précédente, dans lequel l'élément de sélection de module (5) est configuré pour générer l'ensemble d'instructions de module (8) à une fréquence indépendante d'une fréquence d'échantillonnage de la sortie de tension CA du convertisseur source de tension (1).

9. Dispositif de commande selon une quelconque revendication précédente, dans lequel la mesure de la sortie de tension CA provenant du convertisseur source de tension (1) comprend une mesure d'une sortie multi-phasée du convertisseur source de tension (1).

10. Dispositif de commande selon la revendication 1, dans lequel la rotation de l'espace de cadre de référence rotatif est déterminée relativement à une mesure de courant CA provenant du convertisseur source de tension (1).

11. Dispositif de commande selon la revendication 1, dans lequel la valeur de demande comprend une valeur de demande de courant alternatif.

12. Convertisseur source de tension (1) incluant le dispositif de commande (2) de l'une quelconque des revendications 1 à 11.

13. Réseau de transport d'électricité (3, 4) incluant le convertisseur source de tension (1) de la revendication 12.

FIG. 1

FIG. 2

Fig. 3

| Sample the voltage output by VSC at 2kHz | 300 |

↓

| Determine a voltage demand value using DQ transformation based on the sampled voltage rotating sequence terms and rotating sequence terms of a demand value | 301 |

↓

| Determine future voltage demand values using DQ transformation based on the sampled voltage rotating sequence terms and rotating sequence terms of a demand value | 302 |

↓

| Apply inverse DQ transform | 303 |

↓

| Send AC voltage demand signal (containing present and predicted future values) to module selection element at 2kHz | 304 |

↓

| Select present voltage demand value | 305 |

↓

| Construct module instruction set using a AC voltage demand value and provide instruction set to VSC | 306 |

↓

| Poll through predicted AC voltage demand values | 307 |

↓

| Next sample period | 308 |

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013208519 A

**Non-patent literature cited in the description**

- A fast multi-level space vector PWM method based on sequence cyclic shift. **LE SUN et al.** INDUSTRIAL ELECTRONICS (ISIE), 2012 IEEE INTERNATIONAL SYMPOSIUM ON. IEEE, 40-45